# EUROPÄISCHE PATENTANMELDUNG

(11) **EP 2 567 626 A1**
(43) Veröffentlichungstag der Anmeldung: **13.03.2013**
(21) Anmeldenummer: 11180592.5
(22) Anmeldetag: 08.09.2011
(51) Int. Cl.: A23L 2/10, A23L 2/46, A23L 3/00

(54) **Vorrichtung zur Wärmebehandlung und Wärmebehandlungsverfahren**

(71) Anmelder: Belimed AG, 6300 Zug (CH)
(72) Erfinder: Sauter, Martin, 8583 Sulgen (CH)
(74) Vertreter: Hepp Wenger Ryffel AG

(57) **Zusammenfassung**

Die Erfindung betrifft eine Vorrichtung (1, 21) zur Durchführung eines Wärmebehandlungsverfahrens mit einer Wärmebehandlungsflüssigkeit, insbesondere einen Heisswasserberieselungssterilisator. Die Vorrichtung umfasst einen druckfest verschliessbaren, vorzugsweise als hohler Kreiszylinder ausgebildeten, Arbeitsbehälter (2), dessen Innenraum (2.2) eine Verfahrenskammer (4) zur Anordnung von zu behandelndem Gut (3) umfasst. Weiter ist eine eine Zufuhrvorrichtung (6) zur Zufuhr einer Wärmebehandlungsflüssigkeit (5) in die Verfahrenskammer (4) sowie eine Abfuhrvorrichtung (7) zum Abführen von in der Verfahrenskammer (4) vorhandener Wärmebehandlungsflüssigkeit (5) vorhanden. Zudem umfasst die Vorrichtung eine Umwälzvorrichtung (8) zum Umwälzen einer für die Durchführung des Wärmebehandlungsverfahrens in die Verfahrenskammer (4) eingebrachten Menge der Wärmebehandlungsflüssigkeit (5) zwischen Abfuhrvorrichtung (7) und Zufuhrvorrichtung (6). Weiter ist eine Heizvorrichtung (8.4) zum Heizen der Wärmebehandlungsflüssigkeit (5) sowie ein Speicherbehälter (9, 9') zum Zwischenspeichern der weitgehend gesamten für das Wärmebehandlungsverfahren in die Verfahrenskammer (4) eingebrachten Menge der Wärmebehandlungsflüssigkeit (5) vorhanden. Die Vorrichtung umfasst weiter eine Transfervorrichtung (11) zum Überführen der Wärmbehandlungsflüssigkeit (5) aus der Verfahrenskammer (4) in den Speicherbehälter (9, 9') sowie eine Rückführvorrichtung (10, 30) zum Rückführen der Wärmbehandlungsflüssigkeit (5) aus dem Speicherbehälter (9, 9')in die Verfahrenskammer (4). Der Speicherbehälter (9, 9') ist dabei vollständig im Innenraum (2.2) des Arbeitsbehälters (2) angeordnet.

## Beschreibung

Die Erfindung betrifft eine Vorrichtung zur Durchführung eines Wärmebehandlungsverfahrens mit einer Wärmebehandlungsflüssigkeit, insbesondere einen Heisswasserberieselungssterilisator, gemäss dem Oberbegriff des Anspruchs 1. Weiter betrifft die Erfindung ein Verfahren zur Wärmebehandlung mit einer Wärmebehandlungsflüssigkeit, insbesondere zur Durchführung mit der vorgenannten Vorrichtung.

Es sind Vorrichtungen wie beispielsweise Autoklaven zur chargenweisen feuchten Wärmebehandlung wie Sterilisierung, Tyndallisation oder Pasteurisierung bekannt, bei welchen das zu behandelnde Gut in einer druckfest verschliessbaren Verfahrenskammer mit heissem Wasser berieselt wird. Ohne Beschränkung auf ein spezifisches Wärmebehandlungsverfahren wird im Folgenden beispielhaft auf Vorrichtungen zum Sterilisieren verwiesen.

Beim Sterilisieren mittels Heisswasserberieselung wird die Verfahrenskammer nach dem Beladen mit dem Sterilisiergut verschlossen und bis zum Erreichen eines Soll-Wasserstandes mit Wasser befüllt. Spätestens zu diesem Zeitpunkt wird das Wasser von einer Umwälzvorrichtung im Umlauf gefördert und einer Berieselungsvorrichtung zugeführt. Diese verteilt das Sterilisierwasser beispielsweise mittels Düsen und/oder Verteilblechen gleichmässig über dem Sterilisiergut. Im Umlauf ist z.B. ein Wärmetauscher vorgesehen, welcher von einem Heizmedium durchflossen ist und das Wasser auf eine gewünschte Verfahrenstemperatur bringt. In anderen Ausführungen kann das Sterilisierwasser z.B. durch Dampfinjektion geheizt werden. Je nach Anwendung der Vorrichtung liegt die bevorzugte Verfahrenstemperatur des Sterilisierwassers etwa im Bereich von 60 bis 90 Grad Celsius (Pasteurisieren), in einem Bereich bei und bis etwa 100 Grad (Tyndallisieren) und grösser als 100 Grad (Sterilisierung, häufig bei 121 Grad). Nach Ablauf einer Haltephase, während der das Produkt sterilisiert, tyndallisiert oder pasteurisiert wird, kann das zirkulierende Sterilisierwasser und damit das Sterilisiergut auf eine vordefinierte Entnahmetemperatur heruntergekühlt werden. Zur Kühlung kann z.B. ein zusätzlicher, von einem Kühlmedium durchflossener Wärmetauscher im Umlauf vorgesehen sein oder das Sterilisierwasser kann durch Kaltwasserinjektion gekühlt werden. Nach Ende der Kühlung wird das Sterilisierwasser aus der Verfahrenskammer abgeführt, sodass diese zur Entnahme des Sterilisierguts geöffnet werden kann. Dabei kann eine gewisse Restmenge des Sterilisierwassers in der Verfahrenskammer verbleiben.

Um den Wasserverbrauch einzuschränken und eine im Sterilisierwasser vorhandene Restwärme nutzen zu können sind aus dem Stand der Technik Vorrichtungen bekannt, welche Speicherkessel zur Zwischenspeicherung des Sterilisierwassers aufweisen. Beispielsweise beschreibt die DE 40 17 340 A1 eine Vorrichtung zum Sterilisieren mit einem externen Speicherkessel, welcher über ein hydraulisches System derart mit der Verfahrenskammer verbunden ist, dass Sterilisierwasser bei Bedarf zwischen Verfahrenskammer und Speicherkessel und umgekehrt transferiert werden kann. (z.B. während des Beladens und Entladens der Verfahrenskammer). Während der Arbeitsbehälter mit der Verfahrenskammer liegend angeordnet ist, ist der Speicherkessel aufrecht stehend vorgesehen. Aufgrund des erforderlichen Aufnahmevolumens des Speicherkessels ist somit eine vergleichsweise grosse Bauhöhe der Vorrichtung vorgegeben.

Es sind ebenfalls Speicherkessel bekannt, welche liegend angeordnet sind. Beispielsweise beschreibt die US 4,164,590 eine entsprechende Vorrichtung zur Wärmebehandlung von in einer Verfahrenskammer eines Arbeitsbehälters vorhandenem Sterilisiergut, bei welcher ein liegender Speicherkessel oberhalb des liegenden Arbeitskessels angeordnet ist. Eine derartige Anordnung oberhalb des Arbeitskessels hat den Vorteil, dass das Sterilisierwasser ohne zusätzliche Pumpen alleine aufgrund der Schwerkraft vom Speicherkessel in den Arbeitskessel gefördert werden kann. Während diese Ausführung ein kompakteres Bauvolumen aufweist, als entsprechende Vorrichtungen mit einem stehenden Speicherkessel, ist eine Gesamtbauhöhe der Vorrichtung nach wie vor vergleichsweise gross.

Ausserdem haben unabhängig von Anordnung und Ausbildung derartige Speicherkessel den Nachteil, dass sie separat vom Arbeitskessel gereinigt und gegebenenfalls sterilisiert werden müssen, was zusätzlichen Aufwand bei der Wartung der Vorrichtung verursacht.

Aufgabe der Erfindung ist es daher, die genannten Nachteile des Standes der Technik zu überwinden, insbesondere eine Vorrichtung zur Durchführung eines Wärmebehandlungsverfahrens bereitzustellen, welche eine kompakte Bauweise mit vorzugsweise geringer Bauhöhe aufweist. Die Vorrichtung soll dabei einfach zu warten und wirtschaftlich sowie energieeffizient betreibbar sein. Eine weitere Aufgabe der Erfindung ist es, ein wirtschaftliches und energieeffizientes Verfahren zum Betrieb einer derartigen Vorrichtung bereitzustellen.

Diese Aufgaben werden erfindungsgemäss mit einer Vorrichtung gelöst, welche die Merkmale des Anspruchs 1 aufweist sowie mit einem Verfahren, welches die Verfahrensschritte gemäss Anspruch 18 umfasst.

Die Erfindung gemäss Anspruch 1 betrifft eine Vorrichtung zur Durchführung eines Wärmebehandlungsverfahrens mit einer Wärmebehandlungsflüssigkeit, insbesondere einen Heisswasserberieselungssterilisator, umfassend einen druckfest verschliessbaren, vorzugsweise als hohler Kreiszylinder ausgebildeten, Arbeitsbehälter, dessen Innenraum eine Verfahrenskammer zur Anordnung von zu behandelndem Gut umfasst. Weiter ist eine Zufuhrvorrichtung zur Zufuhr einer Wärmebehandlungsflüssigkeit in die Verfahrenskammer vorhanden sowie eine Abfuhrvorrichtung zum Abführen von in der Verfahrenskammer vorhandener Wärmebehandlungsflüssigkeit. Weiter ist eine Umwälzvorrichtung zum Umwälzen von einer zur Durchführung des Wärmebehandlungsverfahrens in die Verfahrenskammer eingebrachten Menge der Wärmebehandlungsflüssigkeit zwischen Abfuhrvorrichtung und Zufuhrvorrichtung sowie eine Heizvorrichtung zum Heizen der Wärmebehandlungsflüssigkeit vorhanden. Die Vorrichtung umfasst weiter einen Speicherbehälter zum Zwischenspeichern der weitgehend gesamten für das Wärmebehandlungsverfahren in die Verfahrenskammer eingebrachten Menge der Wärmebehandlungsflüssigkeit. Weiter weist die Vorrichtung eine Transfervorrichtung zum Überführen der Wärmbehandlungsflüssigkeit aus der Verfahrenskammer in den Speicherbehälter sowie eine Rückführvorrichtung zum Rückführen der Wärmbehandlungsflüssigkeit aus dem Speicherbehälter in die Verfahrenskammer auf. Gemäss dem kennzeichnenden Teil des Anspruchs 1 zeichnet sich die Vorrichtung dadurch aus, dass der Speicherbehälter vollständig im Innenraum des Arbeitsbehälters angeordnet ist.

Bevorzugt ist der Arbeitsbehälter als hohler Kreiszylinder ausgebildet, in dessen Innenraum die Verfahrenskammer angeordnet ist und welcher endseitig mit Stirnwänden abgeschlossen ist. Mit Vorteil ist der Arbeitsbehälter in betriebsbereitem Zustand mit einer Längsachse weitgehend horizontal ausgerichtet, um einen bezüglich dieser Längsrichtung gleichmässigen Füllstand sicherzustellen. Der Arbeitsbehälter kann je nach Anwendung (Pasteurisieren, Sterilisieren etc.) für unterschiedliche Innendrücke (z.B. Unterdruck sowie Überdruck) ausgelegt sein. Bevorzugt weist der Arbeitsbehälter eine Klapptüre auf, welche eine an einer der Stirnflächen ausgebildete Öffnung des Arbeitsbehälters druckfest verschliesst. Die Öffnung ist mit Vorteil derart bemessen, dass wenigstens die Verfahrenskammer über ihren gesamten Querschnitt zugänglich ist, sodass z.B. Transportpaletten mit darauf angeordnetem zu behandelnden Gut auf einfache Weise eingebracht werden können.

Die Zufuhrvorrichtung umfasst bevorzugt eine Zufuhröffnung, welche mit Vorteil in einem oberen Bereich des Arbeitsbehälters, insbesondere in einem oberen Bereich der Verfahrenskammer angeordnet ist. Die Zufuhröffnung kann im Falle eines Berieselungssterilisators direkt an eine Berieselungsvorrichtung angeschlossen sein, mit welcher die zugeführte Wärmebehandlungsflüssigkeit gleichmässig über die Verfahrenskammer verteilt abregenbar und/oder versprühbar ist. Bevorzugt umfasst die Berieselungsvorrichtung hierzu Verteilbleche und/oder Düsen.

Die Abfuhrvorrichtung umfasst bevorzugt einen Sammelbehälter bzw. ein Sammelbecken, über welche die Wärmebehandlungsflüssigkeit zur Abfuhr aus der Verfahrenskammer gesammelt werden kann. Die Abfuhrvorrichtung ist z.B. über Rohre und/oder Ventilvorrichtungen mit der Umwälzvorrichtung verbunden. Bevorzugt ist die Abfuhrvorrichtung zudem mit einem externen Abfluss verbunden, über welchen die Wärmebehandlungsflüssigkeit bei Bedarf vollständig abgeführt werden kann.

Die Umwälzvorrichtung umfasst in der Regel eine Umwälzpumpe, über welche die in die Verfahrenskammer eingebrachte Wärmebehandlungsflüssigkeit von der Abfuhrvorrichtung zur Zufuhrvorrichtung gefördert werden kann. Hierzu sind zudem entsprechende Rohre und/oder Ventilvorrichtungen vorgesehen, mit welchen der Fluss geregelt und/oder geleitet werden kann.

Je nach Anwendung unterscheidet sich die Menge der in die Verfahrenskammer eingebrachten Menge von Wärmebehandlungsflüssigkeit. Beispielsweise wird beim Pasteurisieren das zu behandelnde Gut meist vollständig geflutet, während beim Heisswassersterilisieren das Gut in der Regel nicht überflutet ist. Die konkrete für den jeweiligen Betrieb einzubringende Menge an Wärmebehandlungsflüssigkeit ist dem Fachmann bekannt und bedarf hier keiner weiteren Erläuterungen. Es versteht sich, dass die Umwälzvorrichtung allenfalls an die konkreten Erfordernisse anzupassen ist.

Zur Heizung der Wärmebehandlungsflüssigkeit umfasst bevorzugt die Umwälzvorrichtung eine Heizvorrichtung, welche mit Vorteil einen Wärmetauscher zum Austausch von Wärmeenergie mit einem extern zugeführten heissen Medium wie beispielsweise Dampf vorgesehen ist.

Der Speicherbehälter ist derart bemessen, dass bevorzugt weitgehend die gesamte für das Wärmebehandlungsverfahren in die Verfahrenskammer eingebrachte Menge der Wärmebehandlungsflüssigkeit vom Speicherbehälter aufgenommen werden kann. Damit kann bei Bedarf die Verfahrenskammer vollständig entleert werden, ohne dass die Wärmebehandlungsflüssigkeit entsorgt werden muss und somit verloren ist. Wie oben erwähnt unterscheidet sich die konkrete Menge von Wärmebehandlungsflüssigkeit je nach Verwendungszweck der Vorrichtung, weshalb das Volumen des Speicherbehälters allenfalls entsprechend anzupassen ist. Es versteht sich, dass zur Entnahme oder zum Einbringen des zu behandelnden Guts gegebenenfalls nicht die gesamte Menge der Wärmebehandlungsflüssigkeit in den Speicherbehälter transferiert werden muss, sondern ein gewisser Füllstand in der Verfahrenskammer verbleiben kann bzw. erwünscht ist.

Zur Überführung der Wärmebehandlungsflüssigkeit aus der Verfahrenskammer in den Speicherbehälter umfasst die Transfervorrichtung bevorzugt Rohre und/oder Ventilsvorrichtungen, mit welche sie an die Umwälzvorrichtung angeschlossen ist. Mit Vorteil kann die Transfervorrichtung dabei wenigstens teilweise überlappend mit der Umwälzvorrichtung ausgebildet sein, d.h. beide Vorrichtungen können gemeinsame Komponenten umfassen, sodass Synergien genutzt werden können und Redundanzen im hydraulischen System reduziert sind. Es versteht sich allerdings, dass die Transfervorrichtung auch als eigenständiges hydraulisches System mit beispielsweise eigener Pumpvorrichtung ausgebildet sein kann.

Zur Rückführung der Wärmebehandlungsflüssigkeit aus dem Speicherbehälter in die Verfahrenskammer ist eine Rückführvorrichtung vorhanden. Diese kann bei geeigneter Anordnung des Speicherbehälters im Arbeitsbehälter besonders einfach z.B. nur eine Ventilvorrichtung umfassen, um die Wärmebehandlungsflüssigkeit aufgrund der Schwerkraft aus dem Speicherbehälter direkt in die Verfahrenskammer ablassen zu können. Es versteht sich, dass die Rückführvorrichtung in anderen Ausführungsformen auch eine Pumpe umfassen kann.

Erfindungsgemäss ist der Speicherbehälter im Innenraum des Arbeitsbehälters angeordnet. Auf diese Weise wird erreicht, dass das Bauvolumen, insbesondere die Bauhöhe, der Vorrichtung im Wesentlichen durch die Dimensionierung des Arbeitsbehälters bestimmt ist und kein externer Zusatzbehälter erforderlich ist. Hierbei können insbesondere Toträume im Innenraum des Arbeitsbehälters effizient genutzt werden, welche sich z.B. aufgrund der kreiszylindrischen Form des Arbeitsbehälters und einem in der Regel rechteckigen Querschnitt der Verfahrenskammer ergeben. Bei geeigneter Ausbildung und Anordnung des Speicherbehälters kann dieser somit im Arbeitsbehälter untergebracht sein, ohne dass ein Aufnahmevolumen der Verfahrenskammer beeinträchtigt ist. Zudem kann der Speicherbehälter im Bedarfsfall in einem Arbeitsgang zusammen mit dem Arbeitsbehälter sterilisiert werden, wobei im Falle eines Sterilisators diese Sterilisation automatisch im Zuge der Durchführung des entsprechenden Verfahrens erfolgen kann.

Weiter können auch konstruktiv Synergien genutzt werden, indem z.B. Arbeitsbehälter und Speicherbehälter gemeinsame Behälterwände aufweisen, was nicht zuletzt auch Materialkosten einsparen kann. Zudem kann auch die strukturelle Integrität des Arbeitsbehälters durch den darin ausgebildeten Speicherbehälter verstärkt werden. Insbesondere können Arbeits- und Speicherbehälter gemeinsam eine integrale Struktur als geschweisste Stahlkonstruktion bilden.

Nicht zuletzt bietet der integrierte Speicherbehälter auch eine vollständige Integration der prozessrelevanten Medien im Arbeitsbehälter. Damit gestaltet sich eine Zufuhr und Abfuhr der Wärmebehandlungsflüssigkeit aus der Verfahrenskammer in den Speicherbehälter bzw. umgekehrt besonders einfach. Insbesondere können Rohrverbindungen kurz gehalten werden und, zumindest teilweise, ebenfalls im Arbeitsbehälter angeordnet sein. Dies ist sowohl in konstruktiver Hinsicht als auch in Bezug auf die Energieeffizienz sowie die Wartung der Vorrichtung vorteilhaft.

Mit Vorteil umfasst die Zufuhrvorrichtung eine Berieselungsvorrichtung, welche zum gleichmässigen Berieseln von in der Verfahrenskammer angeordnetem zu behandelndem Gut mit der Wärmebehandlungsflüssigkeit ausgebildet ist. Insbesondere kann die Berieselungsvorrichtung Düsen und/oder Verteilbleche umfassen, wobei die Wärmebehandlungsflüssigkeit bevorzugt von oben , wahlweise aber auch zusätzlich oder nur von den Seiten in die Verfahrenskammer eingebracht werden kann.

In einer bevorzugten Ausführungsform ist die Rückführvorrichtung derart ausgebildet, dass der Speicherbehälter über die Rückführvorrichtung mit der Umwälzvorrichtung fluidmässig verbindbar ist, sodass die Wärmebehandlungsflüssigkeit über die Umwälzvorrichtung aus dem Speicherbehälter in die Verfahrenskammer rückführbar ist. Bevorzugt umfasst die Rückführvorrichtung Rohre und/oder Ventilsvorrichtungen, mit welchen sie an die Umwälzvorrichtung angeschlossen ist. Mit Vorteil ist die Transfervorrichtung dabei teilweise überlappend mit der Umwälzvorrichtung ausgebildet, sodass Synergien genutzt werden können und möglichst geringe Redundanzen im hydraulischen System vorhanden sind. Es versteht sich allerdings, dass die Rückführvorrichtung auch als eigenständiges hydraulisches System mit beispielsweise separater pumpe ausgebildet sein kann.

Bei einer je nach Erfordernis ebenfalls bevorzugten Ausführungsform ist die Rückführvorrichtung jedoch derart ausgebildet, dass der Speicherbehälter über die Rückführvorrichtung direkt mit der Verfahrenskammer verbindbar ist. Insbesondere ist der Speicherbehälter derart im Innenraum des Arbeitsbehälters angeordnet und die Rückführvorrichtung ist derart ausgebildet, dass die Wärmebehandlungsflüssigkeit aufgrund der Schwerkraft über die Rückführvorrichtung in die Verfahrenskammer fliessen kann, wenn der Speicherbehälter über die Rückführvorrichtung mit der Verfahrenskammer fluidmässig verbunden ist. Damit ist ein passives System geschaffen, welches auf einfache Weise ohne Energieaufwand eine Beschickung der Verfahrenskammer mit einer gewünschten Menge Wärmebehandlungsflüssigkeit aus dem Speicherbehälter erlaubt.

Bevorzugt umfasst eine derartige Rückführvorrichtung eine im Innenraum des Arbeitsbehälters angeordnete Ventilvorrichtung. Damit kann die Rückführvorrichtung bevorzugt vollständig im Innenraum des Arbeitsbehälters angeordnet sein. Eine als einfaches Ablassventil am Speicherbehälter ausgebildete Ventilvorrichtung reicht in der Regel aus, um auf einfache Weise einen Fluidschluss zwischen dem im Innenraum des Arbeitsbehälters angeordneten Speicherbehälter und der Verfahrenskammer herzustellen. Aufgrund der Anordnung im Innenraum wird die Ventilvorrichtung zudem analog dem Speicherbehälter zusammen mit dem Arbeitsbehälter sterilisiert, was die Wartung der Vorrichtung weiter vereinfacht.

Die Rückführvorrichtung kann je nach Erfordernis mit Vorteil auch eine ausserhalb des Arbeitsbehälters angeordnete Ventilvorrichtung umfassen. In diesem Fall ist die Ventilvorrichtung von aussen zugänglich und kann beispielsweise manuell betätigt oder gewartet werden. Hierzu sind allerdings Verrohrungen vom Speicherbehälter nach aussen und von der Ventilvorrichtung zur Verfahrenskammer erforderlich, was zwar konstruktiv aufwändiger ist, aber je nach Anforderung aufgrund der genannten Vorteile vorgezogen werden kann.

Wie eingangs erwähnt kann die Transfervorrichtung zumindest teilweise mit der Umwälzvorrichtung überlappen. Bei einer bevorzugten Ausführungsform umfasst die Umwälzvorrichtung daher eine Ventilanordnung, mit welcher ein von der Abfuhrvorrichtung abgeführtes Wärmbehandlungsmittel wahlweise zum Umwälzen der Zufuhrvorrichtung oder über die Transfervorrichtung zum Überführen in den Speicherbehälter zugeführt werden kann. Die Transfervorrichtung kann dabei als einfache, über die Ventilvorrichtung regelbare Abzweigung der Umwälzvorrichtung ausgebildet sein, welche in den Speicherbehälter mündet.

Wie eingangs erwähnt, umfasst die Umwälzvorrichtung mit Vorteil einen Wärmetauscher zur Heizung des Wärmebehandlungsmittels beim Umwälzen und weist vorzugsweise einen weiteren Wärmetauscher zur Kühlung des Wärmebehandlungsmittels beim Umwälzen auf. Indem zwei getrennte Wärmetauscher für Heizung und Kühlung vorgesehen sind, können diese Komponenten für die jeweilige Anforderung optimiert sein. Grundsätzlich ist es jedoch auch denkbar, nur einen Wärmetauscher zur wahlweisen Heizung oder Kühlung vorzusehen oder Heizung und Kühlung auf andere Weise zu erreichen, beispielsweise durch Dampf- bzw. Kaltwasserinjektion. In letzterem Fall ändert sich allerdings die im Umwälzkreislauf befindliche Menge Wärmebehandlungsflüssigkeit ständig, womit ein Füllstand kontinuierlich durch Zu- oder Abfuhr von Wärmebehandlungsflüssigkeit ausgeglichen werden muss.

Bei einer besonders vorteilhaften Konstruktion der Speicherbehälter an einer Innenwand des Arbeitsbehälters ausgebildet, wobei mit Vorteil die Innenwand des Arbeitsbehälters einen Teil einer Wand des Speicherbehälters bildet. Damit können konstruktive Elemente zum einen als Behälterwand doppelt genutzt werden und zum anderen kann der Speicherbehälter gleichzeitig als Verstärkung der Arbeitsbehälterwand dienen.

Der Speicherbehälter kann dabei derart ausgebildet sein, dass ein Innenraum des Speicherbehälters mit dem Innenraum des Arbeitsbehälters kommuniziert, insbesondere in einem oberen Bereich offen ist. Damit ist der Vorteil verbunden, dass der Innenraum des Speicherbehälters einfach zugänglich ist und bei der Wartung wie z.B. Reinigung oder Sterilisierung des Innenraums des Arbeitsbehälters ohne spezielle Massnahmen dieselbe Wartung erfährt.

Alternativ und je nach Anforderung ebenfalls vorteilhaft ist eine Ausführungsform, bei welcher der Innenraum des Speicherbehälters zum Innenraum des Arbeitsbehälters hin fluiddicht abschliessbar ist. Dies ist beispielsweise für den Fall erforderlich, falls die Rückführung der Wärmebehandlungsflüssigkeit aus dem Speicherbehälter in die Verfahrenskammer eine Beaufschlagung des Innenraums des Speicherbehälters mit einem Überdruck erfordert.

Wie bereits eingangs erwähnt ist der Arbeitsbehälter mit Vorteil als im Wesentlichen länglicher Kreiszylinder ausgebildet, wobei sich die Verfahrenskammer längs der Längsrichtung des Arbeitsbehälters erstreckt und einen weitgehend rechteckigen Querschnitt aufweist. Es versteht sich, dass der Arbeitsbehälter auch andere, weitgehend beliebige Formen aufweisen kann, wie beispielsweise oval-zylindrisch, aber auch quaderförmig oder kubisch. Eine kreiszylindrische Form hat jedoch konstruktive Vorteile und ist in struktureller Hinsicht besonders stabil.

Mit Vorteil weist der Speicherbehälter einen weitgehend kreissegmentförmigen Querschnitt auf und ist in einem Bereich zwischen Verfahrenskammer und Wand des Arbeitsbehälters angeordnet. Insbesondere im Fall eines kreiszylindrischen Arbeitsbehälters kann der Speicherbehälter somit an die Innenwand geschmiegt ausgebildet sein und einen Totraum zwischen Verfahrenskammer und Arbeitsbehälterwand optimal ausfüllen. Weitgehend kreissegmentförmig umfasst hier insbesondere auch Kreissegmentformen mit gekappten Ecken. Bevorzugt begrenzen die Abschnitte der Wände des Speicherbehälters dabei die Verfahrenskammer zumindest teilweise. Damit kann die Wand des Speicherbehälters wenigstens teilweise eine Doppelfunktion erfüllen, womit eine besonders einfache Konstruktion erreicht wird.

Bevorzugt erstreckt sich der Speicherbehälter weitgehend über die gesamte Länge des Innenraums des Arbeitsbehälters. Damit wird der grundsätzlich zur Verfügung stehende Platz im Arbeitsbehälter optimal genutzt, sodass eine möglichst grosse Menge Wärmebehandlungsflüssigkeit im Speicherbehälter aufgenommen werden kann.

Sofern ein besonders grosses Speichervolumen des Speicherbehälters erforderlich ist, kann mit Vorteil ein weiterer Speicherbehälter im Innenraum des Arbeitsbehälters vorhanden sein, welcher bevorzugt bezüglich der Längsachse des Arbeitsbehälters dem ersten Speicherbehälter gegenüberliegend angeordnet und weitgehend, vorzugsweise spiegelbildlich, baugleich ausgebildet ist. Insbesondere im Fall eines kreiszylindrisch ausgebildeten Arbeitsbehälters mit einer Verfahrenskammer mit rechteckigem Querschnitt können auf diese Weise wenigstens zwei Speicherbehälter auf vorteilhafte Weise in den Toträumen untergebracht werden. Je nach Erfordernis können die beiden Speicherbehälter miteinander kommunizieren oder als separate, gegeneinander abgeschlossene Behälter ausgebildet sein.

Bevorzugt umfasst der Speicherbehälter eine Heizvorrichtung, mit welcher die Wärmebehandlungsflüssigkeit zur Verhinderung einer Verkeimung beheizt werden kann, wenn sie im Speicherbehälter zwischengespeichert ist. Damit kann die Wärmebehandlungsflüssigkeit keimfrei gehalten werden, während die Verfahrenskammer z.B. Be- oder Entladen wird.

Die erfindungsgemässe Vorrichtung erlaubt auch die Durchführung eines besonders vorteilhaften Verfahrens zur Wärmebehandlung mit einer Wärmebehandlungsflüssigkeit. Erfindungsgemäss umfasst das Verfahren die folgenden Schritte:
a) Einbringen von zu behandelndem Gut in eine Verfahrenskammer eines Arbeitsbehälters,
b) Einbringen einer zur Durchführung des Verfahrens erforderlichen Menge einer Wärmebehandlungsflüssigkeit aus einem im Arbeitsbehälter angeordneten Speicherbehälter in die Verfahrenskammer,
c) beheiztes Umwälzen der Wärmebehandlungsflüssigkeit mit einer Umwälzvorrichtung zwischen einer Abfuhrvorrichtung zur Abfuhr von Wärmebehandlungsflüssigkeit aus der Verfahrenskammer und einer Zufuhrvorrichtung zur Zufuhr von Wärmebehandlungsflüssigkeit in die Verfahrenskammer, wobei die Wärmebehandlungsflüssigkeit auf eine Verfahrenstemperatur geheizt wird,
d) Überführen eines wesentlichen Anteils der in der Verfahrenskammer vorhandenen Wärmebehandlungsflüssigkeit in den im Arbeitsbehälter angeordneten Speicherbehälter,
e) gegebenenfalls Ablassen eines Teils der Wärmebehandlungsflüssigkeit und Ausgleichen eines Füllstandes im Speicherbehälter durch Zufuhr von zusätzlicher Wärmebehandlungsflüssigkeit von aussen.

Während des beheizten Umwälzens der Wärmebehandlungsflüssigkeit wird diese je nach Art des Verfahrens auf eine Verfahrenstemperatur von 60 bis 90 Grad Celsius (Pasteurisieren), auf einen Bereich bei und bis maximal etwa 100 Grad Celsius (Tyndallisieren) oder auf mehr als 100 Grad (Sterilisierung) geheizt. Bei der Sterilisierung erfolgt eine Heizung bevorzugt während auf 121 Grad Celsius. Typischerweise erfolgt das beheizte Umwälzen während etwa 20 Min. Beim Tyndallisieren liegen die entsprechenden Werte typisch bei 30. Min und 100 Grad Celsius. Es versteht sich, dass diese Werte in Abhängigkeit der konkreten Anforderung variieren können.

Erfindungsgemäss erfolgt das Einbringen der zur Durchführung des Verfahrens erforderlichen Menge der Wärmebehandlungsflüssigkeit in die Verfahrenskammer aus dem im Arbeitsbehälter angeordneten Speicherbehälter. Ebenso erfolgt erfindungsgemäss das Überführen eines wesentlichen Anteils der in der Verfahrenskammer vorhandenen Wärmebehandlungsflüssigkeit in den im Arbeitsbehälter angeordneten Speicherbehälter. Auf diese Weise lässt sich ein Transfer der Wärmebehandlungsflüssigkeit zwischen Verfahrenskammer und Speicherbehälter auf besonders einfache Weise erreichen. Weitere verfahrensbezogene Vorteile ergeben sich unmittelbar aus den bereits im Zusammenhang mit der Vorrichtung beschriebenen Vorteilen.

Das Verfahren kann mit Vorteil nach dem beheizten Umwälzen einen zusätzlichen Schritt umfassen, in welchem während des Umwälzens der Wärmebehandlungsflüssigkeit mit der Umwälzvorrichtung zwischen der Abfuhrvorrichtung und der Zufuhrvorrichtung der Verfahrenskammer, die Wärmebehandlungsflüssigkeit auf eine gewünschte Entnahmetemperatur gekühlt wird (gekühltes Umwälzen). Damit wird das zu behandelnde Gut von der Verfahrenstemperatur auf eine Entnahmetemperatur gebracht, bei welcher das Gut aus der Verfahrenskammer entnommen werden kann. Typische Werte für die Entnahmetemperatur liegen dabei im Bereich von 30 bis 90 Grad Celsius. Die Zeitdauer für diesen Schritt hängt unter anderem von der Temperaturdifferenz zwischen der Verfahrenstemperatur und der gewünschten Entnahmetemperatur ab und kann daher variieren.

Bevorzugt ist die Zufuhrvorrichtung als Berieselungsvorrichtung zum gleichmässigen Berieseln von in der Verfahrenskammer angeordnetem zu behandelndem Gut ausgebildet, sodass mit Vorteil im Schritt des Umwälzens in der Verfahrenskammer angeordnetes zu behandelndes Gut über die Zufuhrvorrichtung gleichmässig mit der Wärmebehandlungsflüssigkeit berieselt wird. Damit ist sichergestellt, dass das gesamte zu behandelnde Gut gleichmässig auf die gewünschte Temperatur gebracht wird.

Mit Vorteil führt die Umwälzvorrichtung bei der Überführung der Wärmebehandlungsflüssigkeit in den Speicherbehälter die Wärmebehandlungsflüssigkeit über eine Transfervorrichtung dem Speicherbehälter zu. Indem das Verfahren die Umwälzvorrichtung auch für die Überführung nutzt, wird eine besonders gute Effizienz erreicht.

Beim Einbringen der Wärmebehandlungsflüssigkeit aus dem Speicherbehälter in die Verfahrenskammer wird bevorzugt der Speicherbehälter über eine Rückführvorrichtung mit der Umwälzvorrichtung fluidmässig verbunden und die Wärmebehandlungsflüssigkeit über die Umwälzvorrichtung und die Zufuhrvorrichtung aus dem Speicherbehälter in die Verfahrenskammer eingebracht wird. Diese Variante des Verfahrens greift für eine weitere Funktion auf die Umwälzpumpe zu, womit die ohnehin vorhandenen Komponenten der Vorrichtung besonders effizient genutzt werden.

Alternativ kann beim Einbringen der Wärmebehandlungsflüssigkeit aus dem Speicherbehälter in die Verfahrenskammer der Speicherbehälter über eine Rückführvorrichtung direkt mit der Verfahrenskammer fluidmässig verbunden werden, beispielsweise durch Öffnen einer Ventilvorrichtung der Rückführvorrichtung. Die Wärmebehandlungsflüssigkeit fliesst dann bevorzugt alleine aufgrund der Schwerkraft über die Rückführvorrichtung aus dem Speicherbehälter in die Verfahrenskammer. Diese Variante hat den Vorteil, dass keine Pumpe, und somit keine Energie, erforderlich ist, um die Wärmebehandlungsflüssigkeit aus dem Speicherbehälter in die Verfahrenskammer einzubringen.

Wie bereits eingangs erwähnt, kommt mit besonderem Vorteil eine Wärmebehandlungsflüssigkeit zur Anwendung, welche im Wesentlichen aus Wasser besteht. Insbesondere kann die Wärmebehandlungsflüssigkeit ausschliesslich aus Wasser bestehen (selbstverständlich mit Verunreinigungen, wie sie beispielsweise in Leitungswasser zu finden sind). Damit ist eine kostengünstige Variante gegeben und die Wärmebehandlungsflüssigkeit kann ohne grossen Aufwand von externen Quellen ergänzt werden. Es versteht sich, dass sofern erforderlich auch Beimengungen von Desinfektionsmitteln oder eine Ozonisierung des Wassers vorgenommen werden kann. Ebenso können auch andere geeignete Wärmebehandlungsflüssigkeiten zum Einsatz kommen, sofern die konkreten Anforderungen dies erforderlich machen.

Weitere Vorteile und Einzelmerkmale der Erfindung sind in den Zeichnungen dargestellt und werden nachstehend beschrieben. Es zeigen schematisch:
- Figur 1: eine erste Ausführungsform einer erfindungsgemässen Vorrichtung zur Durchführung eines Wärmebehandlungsverfahrens in einer Querschnittsansicht;
- Figur 2: eine zur Ansicht der Fig. 1 analoge Darstellung einer weiteren Ausführungsform einer erfindungsgemässen Vorrichtung;
- Figur 3: Längsschnitt durch einen Arbeitsbehälter einer erfindungsgemässen Vorrichtung;
- Figur 4: Flussdiagramm des erfindungsgemässen Verfahrens.

In den Figuren sind grundsätzlich gleiche Teile mit gleichen Bezugszeichen versehen.

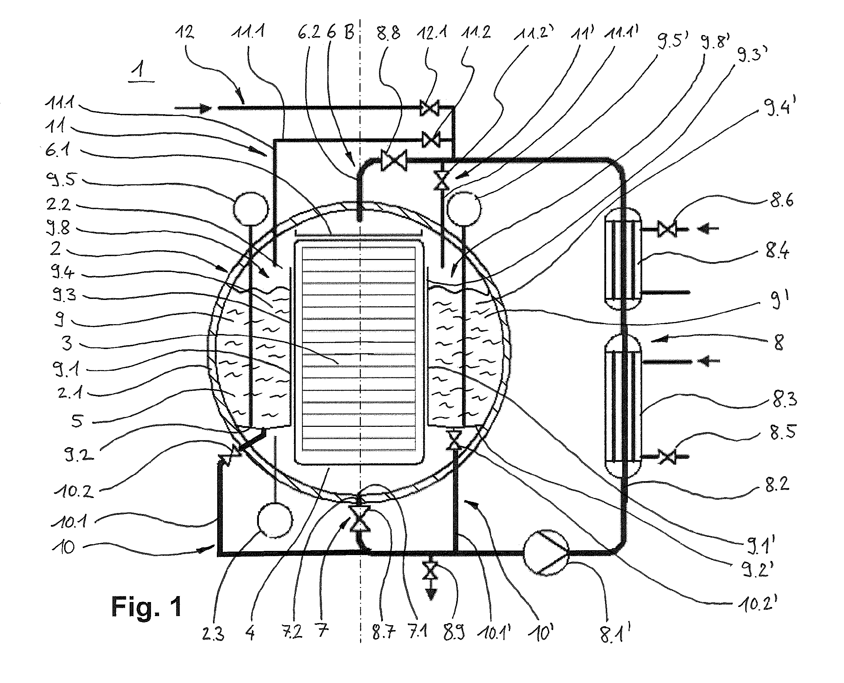

Figur 1 zeigt eine schematische Darstellung einer ersten Ausführungsform einer erfindungsgemässen Vorrichtung 1 zur Durchführung eines Wärmebehandlungsverfahrens in einer Querschnittsansicht senkrecht zu einer Längsachse A eines kreiszylindrisch ausgebildeten Arbeitsbehälters 2. Die Vorrichtung 1 gemäss Fig. 1 ist insbesondere als Sterilisator zur Berieselung mit Heisswasser von Sterilisiergut 3 vorgesehen. Im Rahmen der vorliegenden Erfindungsbeschreibung wird auf Richtungen wie oben, unten, seitlich sowie horizontal und vertikal Bezug genommen. Diese Richtungen sind dabei relativ zu einer betriebsbereiten Anordnung des Arbeitsbehälters 2 bzw. der Vorrichtung 1 zu verstehen, wobei eine betriebsbereite Anordnung der Vorrichtung 1 aufgrund der schwerkraftbedingten Flussrichtung bzw. Fallrichtung von Wasser (Vertikale) vorgegeben ist. Der Arbeitsbehälter 2 ist vorliegend in betriebsbereitem Zustand mit seiner Längsachse A weitgehend horizontal angeordnet.

Der Arbeitsbehälter 2 weist eine kreiszylindrische Behälterwand 2.1 auf, welche einen Innenraum 2.2 des Arbeitsbehälters 2 begrenzt. Im Innenraum 2.2 ist ein in Längsrichtung A sich über die gesamte Länge des Arbeitsbehälters 2 erstreckender Bereich mit rechteckigem Querschnitt angeordnet, welcher als Sterilisierkammer 4 (Autoklav) ausgebildet ist. In der Sterilisierkammer 4 ist während der Durchführung eines Sterilisationsprozesses das Sterilisiergut 3 angeordnet. Es versteht sich, dass die Sterilisierkammer 4 nicht als abgeschlossene Kammer im Innenraum 2.2 ausgebildet zu sein braucht. Vielmehr bezeichnet die Sterilisierkammer 4 einen Raumbereich im Innenraum 2.2 des Arbeitsbehälters 2, welcher zur Anordnung des Sterilisierguts 3 und zur Berieselung mit Sterilisierwasser 5 vorgesehen ist.

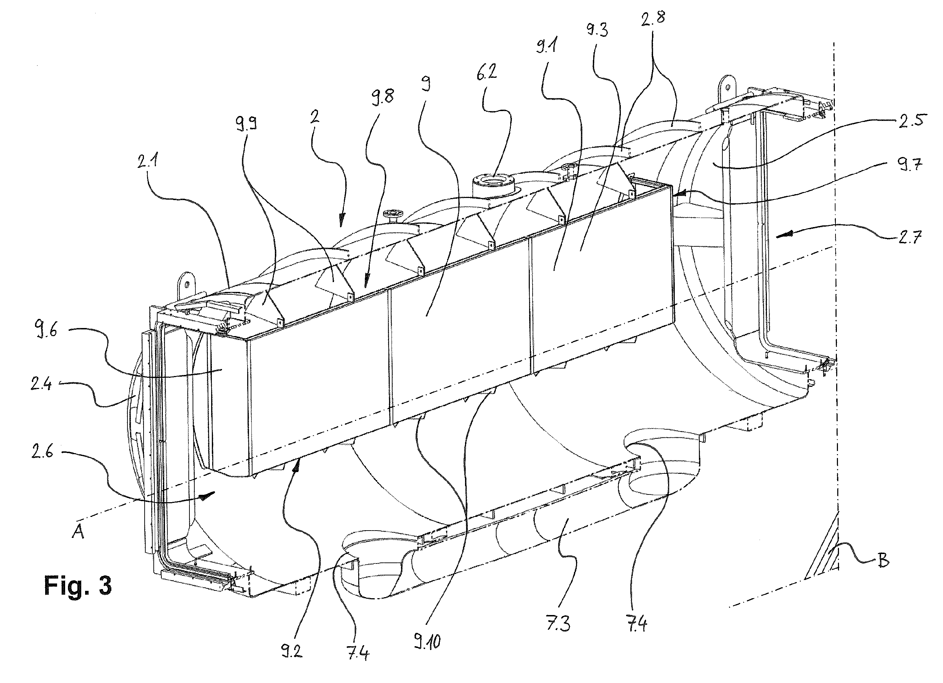

Der Innenraum 2.2 des Arbeitsbehälters 2 ist in Längsrichtung A endseitig mit Stirnwänden 2.4 und 2.5 abgeschlossen (in Fig. 1 nicht dargestellt, siehe Fig. 3). An wenigstens einer der Stirnwände 2.4 (2.5) ist eine mit einer Türe druckfest verschliessbare Öffnung 2.6 (2.7) ausgebildet (siehe Fig. 3), durch welche das Sterilisiergut 3 in die Sterilisierkammer 4 eingebracht werden kann. Mit Vorteil ist an beiden Stirnwänden 2.4 und 2.5 eine entsprechende Öffnung 2.6 bzw. 2.7 ausgebildet. In diesem Fall kann eine der Öffnungen immer zur Entnahme von bereits sterilisiertem Gut und die andere immer zum Einbringen von frischem, noch unsterilisiertem Gut vorgesehen sein. Bevorzugt ist bei geöffneter Entnahmeöffnung die Einbringöffnung geschlossen. Nach der Entnahme des bereits sterilisierten Guts wird die Entnahmeöffnung geschlossen und erst dann die Einbringöffnung zum Einbringen von unsterilisiertem Gut in die Sterilisierkammer 4 geöffnet. Bei einem derartigen Betrieb nach Art einer Schleuse kann eine Kontamination von bereits sterilisiertem Gut bei der Entnahme möglichst verhindert werden (Entnahmeseite ist Sterilseite, Einbringseite ist Unreinseite). Es versteht sich, dass beispielsweise zur Wartungszwecken auch beide Öffnungen 2.6 und 2.7 gleichzeitig geöffnet sein können.

Oberhalb der Sterilisierkammer 4 ist eine Zufuhrvorrichtung 6 angeordnet, welche eine im Innenraum 2.2 des Arbeitsbehälters 2 angeordnete Berieselungsvorrichtung 6.1 sowie einen Rohrleitungsabschnitt 6.2 umfasst. Der Rohrleitungsabschnitt 6.2 tritt durch die Behälterwand 2.1 hindurch, sodass über die Rohrleitung 6.2 Sterilisierwasser 5 von aussen in den Arbeitsbehälter 2 eingebracht werden kann. Die Rohrleitung 6.2 ist mit der Berieselungsvorrichtung 6.1 verbunden, sodass das zugeführte Sterilisierwasser 5 über die Berieselungsvorrichtung 6.1 gleichmässig auf die Sterilisierkammer 4 verteilt abgeregnet und/oder versprüht werden kann. Die Berieselungsvorrichtung 6.1 weist hierzu beispielsweise Düsen und/oder Verteilbleche oder ähnlich wirkende Elemente auf.

Unterhalb der Sterilisierkammer 4 ist eine Abfuhrvorrichtung 7 zur Abfuhr von angesammeltem Sterilisierwasser 5 aus dem Arbeitsbehälter 2 ausgebildet. Die Abfuhrvorrichtung 7 ist bevorzugt an einem tiefsten Punkt des Innenraums 2.2 angeordnet und weist eine Abfuhröffnung 7.1 auf, welche an einen Rohrleitungsabschnitt 7.2 anschliesst. Die Abfuhrvorrichtung 7 kann auch einen separaten Sammelbehälter 7.3 umfassen (in Fig. 1 nicht dargestellt, siehe Fig. 3), welcher in einem unteren Bereich des Arbeitsbehälters 2, bevorzugt unterhalb der Sterilisierkammer 4, angeordnet ist und mit der Sterilisierkammer 4 kommuniziert und an welchen die Rohrleitung 7.2 anschliesst.

Der Rohrabschnitt 7.2 tritt durch die Behälterwand 2.1 hindurch, sodass über die Rohrleitung 7.2 Sterilisierwasser 5 aus dem Arbeitsbehälter 2 nach aussen abgeführt werden kann. Im Innenraum 2.2 ist eine Füllstandsanzeiger 2.3 vorhanden, mit welchem ein Füllstand von Sterilisierwasser 5 im Arbeitsbehälter 2 überwacht werden kann.

Zwischen Rohrabschnitt 6.2 der Zufuhrvorrichtung 6 und Rohrabschnitt 7.2 der Abfuhrvorrichtung 7 ist eine Umwälzvorrichtung 8 umfassend eine Umwälzpumpe 8.1 angeordnet, welche die beiden Rohrabschnitte 6.2 und 7.2 über eine Rohrleitung 8.2 miteinander verbindet. Die Pump 8.1 ist dabei derart in der Rohrleitung 8.2 angeordnet, dass eine Pumprichtung von Rohrleitung 7.2 zu Rohrleitung 6.2 weist. Es versteht sich, dass die Pumpe 8.1 zusätzlich auch zum Betrieb in Gegenrichtung ausgebildet sein kann. Die Rohrleitung 8.2 schliesst über eine Ventilvorrichtung 8.7 an den Rohrabschnitt 7.2 und über eine Ventilvorrichtung 8.8 an den Rohrabschnitt 6.2 an.

Die Umwälzvorrichtung 8 weist bezüglich einer Flussrichtung in der Rohrleitung 8.2 hintereinander angeordnete Wärmetauscher 8.3 und 8.4 auf. Ein in Flussrichtung erster Wärmetauscher 8.3 kann von aussen mit einem Kühlmedium versorgt werden, sodass das in der Rohrleitung 8.3 fliessende Sterilisierwasser 5 gekühlt werden kann. Der in Flussrichtung zweite Wärmetauscher 8.4 kann mit einem Heizmedium versorgt werden, mit welchem das in der Rohrleitung 8.3 fliessende Sterilisierwasser 5 geheizt werden kann. Jeder der Wärmetauscher 8.3 und 8.4 weist eine Ventilvorrichtung 8.5 bzw. 8.6 auf, über welche ein Zufluss des Kühlmediums respektive des Heizmediums geregelt werden kann.

Zwischen Ventilvorrichtung 8.7 und Umwälzpumpe 8.1 ist eine Abzweigung der Rohrleitung 8.2 über eine Ventilvorrichtung 8.9 an einen externen Abfluss angeschlossen, sodass das in der Rohrleitung 8.2 befindliche Sterilisierwasser 5 bei Bedarf abgelassen werden kann.

Im Innenraum des Arbeitsbehälters 2 sind zwei Speicherbehälter 9 und 9' angeordnet. In der Darstellung der Fig. 1 ist das gesamte Sterilisierwasser 5 in den Speicherbehältern 9 und 9' vorhanden. Die Speicherbehälter 9 und 9' sind bezüglich einer Vertikalebene B, in welcher die Längsachse A angeordnet ist, symmetrisch ausgebildet. Im Folgenden ist daher nur der Speicherbehälter 9 im Detail beschrieben.

Der Speicherbehälter 9 ist in einem Bereich zwischen der Behälterwand 2.1 und der Sterilisierkammer 4 angeordnet. Der Speicherbehälter 9 umfasst eine im Querschnitt weitgehend L-förmige und in Längsrichtung A angeordnete Behälterwand 9.1. Die Behälterwand 9.1 weist einen weitgehend horizontal ausgerichteten Bodenabschnitt 9.2 auf. Der Bodenabschnitt 9.2 erstreckt sich von einer Innenseite der Behälterwand 2.1 weitgehend horizontal in Richtung zur Ebene B. Der Bodenabschnitt 9.2 bildet im Querschnitt einen kürzeren Arm der L-Form. An einer von der Behälterwand 2.1 abgewandten Längskante des Bodenabschnitts 9.2 schliesst ein Seitenwandabschnitt 9.3 der Behälterwand 9.1 an, welcher sich in vertikaler Richtung nach oben erstreckt, d.h. weitgehend rechtwinklig zum Boden 9.2 angeordnet ist. Der Seitenwandabschnitt 9.3 bildet dabei im Querschnitt einen längeren Arm der L-Form.

Die Seitenwand 9.3 ist an ihrer oberen Längskante frei und von der Innenseite der Behälterwand 2.1 beabstandet. Die Seitenwand 9.3 ist dabei weitgehend parallel zur Ebene B ausgerichtet und begrenzt die Sterilisierkammer 4 in einer Richtung senkrecht zu B (siehe Fig. 3). In Längsrichtung A ist der Speicherbehälter 9 endseitig durch Stirnflächen 9.6 und 9.7 abgeschlossen (siehe Fig. 3). Somit ergibt sich ein nach unten geschlossener und an einer Oberseite 9.8 offener Innenraum 9.4 des Speicherbehälters 9, welcher von der Behälterwand 2.1, der Seitenwand 9.3 sowie den Stirnwänden 9.6 und 9.7 begrenzt ist. Zur Überwachung eines Füllstandes im Innenraum 9.4 ist im Speicherbehälter 9 ein Füllstandsanzeiger 9.5 vorhanden.

Der Speicherbehälter 9' weist eine weitgehend entsprechend der Behälterwand 9.1 (allerdings spiegelbildlich bezüglich der Ebene B) ausgebildete Behälterwand 9.1' mit einem Boden 9.2' und einer Seitenwand 9.3' auf. Analog ergibt sich somit ein nach oben offener, in Längsrichtung A von Stirnwänden 9.6' und 9.7' abgeschlossener Innenraum 9.4' des Speicherbehälters 9' zwischen der Behälterwand 2.1 und der Speicherbehälterwand 9.1'. Zur Überwachung eines Füllstandes im Innenraum 9.4' ist auch im Speicherbehälter 9' ein Füllstandsanzeiger 9.5' vorhanden.

Grundsätzlich ist es denkbar, die beiden Speicherbehälter 9 und 9' miteinander kommunizierend auszubilden, sodass beispielsweise eine einzelner Füllstandsanzeiger und eine einzelne Rückführvorrichtung mit nur einer Rohrleitung und nur einer Ventilvorrichtung ausreicht. Ebenso können die Behälterwände der Speicherbehälter im Querschnitt auch U-förmig ausgebildet sein, wobei die beiden Arme der U-Form weitgehend horizontal angeordnet sind und mit ihren freien Enden an der Behälterwand 2.2 des Arbeitsbehälters 2 befestigt sind. Ein unterer Arm entspricht in diesem Fall dem Boden des Speicherbehälters, während der andere Arm einem Deckel und die Basis der U-Form einer vertikal angeordneten Seitenwand entspricht. Somit können Speicherbehälter bereitgestellt werden, welche gegen den Innenraum 2.2 des Arbeitsbehälters 2 abgeschlossen sind, d.h. im Gegensatz zu den Speicherbehältern 9 und 9' auch an einer Oberseite geschlossen sind.

Die Behälterwand 9.1 weist im Boden 9.2 einen in Längsrichtung A ausgerichteten leichten Längsknick nach unten auf, um eine tiefste Stelle im Speicherbehälter 9 zu definieren. Im Bereich des Knicks schliesst eine mit dem Innenraum 9.4 des Speicherbehälters 9 kommunizierende Rohrleitung 10.1 einer Rückführvorrichtung 10 an, welche aus dem Arbeitsbehälter 2 hinaus führt und unmittelbar nach dem Ventil 8.7 in die Rohrleitung 8.2 mündet. In der Rohrleitung 10.1 ist ausserhalb des Arbeitsbehälters 2 eine Ventilvorrichtung 10.2 angeordnet, mit welcher die Rohrleitung 10.1 geöffnet oder verschlossen werden kann.

Eine entsprechende Rohrleitung 10.1' einer Rückführvorrichtung 10' schliesst analog der Rohrleitung 10.1 an den Speicherbehälter 9' an und führt ebenfalls aus dem Arbeitsbehälter 2 hinaus und mündet unmittelbar nach der Abzweigung mit Ventil 8.9 in die Rohrleitung 8.2. Im Gegensatz zur Rohrleitung 10.1 weist die Rohrleitung 10.1' eine innerhalb des Arbeitsbehälters 2 angeordnete Ventilvorrichtung 10.2' auf, welche im Wesentlichen direkt an den Speicherbehälter 9' anschliesst. Es versteht sich, dass auch beide Ventilvorrichtungen 10.2 und 10.2' innerhalb oder beide ausserhalb des Arbeitsbehälters 2 angeordnet sein können. Kurz vor der Ventilvorrichtung 8.8 der Rohrleitung 8.2 schliessen Transfervorrichtungen 11 und 11' an. Die Transfervorrichtungen 11 und 11' umfassen jeweils eine Rohrleitung 11.1 bzw. 11.1', welche an einer Doppelabzweigung abzweigen und in den Arbeitsbehälter 2 hineinführen. Die Rohrleitungen 11.1 und 11.1' münden jeweils oberhalb der Speicherbehälter 9 und 9' derart, dass ein durch die Rohrleitungen 11.1 und 11.1' zugeführtes Sterilisierwasser 5 in den Speicherbehältern 9 und 9' aufgefangen und dort gesammelt wird. Im Falle von gegen den Innenraum 2.2 abgeschlossenen Speicherbehältern (nicht dargestellt) führen die Rohrleitungen 11.1 und 11.1' durch die entsprechenden Oberseiten der Speicherbehälter in die Innenräume des jeweiligen Speicherbehälters hinein.

Die Rohrleitungen 11.1 und 11.1' weisen jeweils kurz nach der Doppelabzweigung der Leitung 8.2 eine ausserhalb des Arbeitsbehälters 2 angeordnete Ventilvorrichtung 11.2 und 11.2' auf, mit welchen die Rohrleitungen 11.1 und 11.1' zur Rohrleitung 8.2 geöffnet oder geschlossen werden können. Ebenfalls im Bereich der Doppelabzweigung mündet ein Anschluss 12 mit einer Ventilvorrichtung 12.1 zur Zufuhr von externem Frischwasser in die Rohrleitung 8.2.

Ein Verfahren zur Sterilisierung von Sterilisiergut mit der beschriebenen Vorrichtung 1 kann wie folgt ablaufen:
Zunächst wir das Sterilisiergut 3 in die Sterilisierkammer (Autoklav) 4 eingebracht. Danach wird der Arbeitsbehälter 2 verriegelt.

Beim Heisswasser-Berieselungsverfahren wird eine vordefinierte Menge Sterilisierwasser 5 in die Sterilisierkammer 4 eingebracht. Das Sterilisierwasser 5 kann bei Prozessbeginn als Frischwasser vom Anschluss 12 über die Ventile 12.1 und 8.7 durch die Rohrleitung 8.2 über die Abfuhröffnung 7.1 in die Sterilisierkammer 4 eingebracht werden. Dabei wird das Frischwasser entgegen der Flussrichtung beim Umwälzen durch die Rohrleitung 8.2 gefördert, wozu die Ventile 11.2, 11.2' und 8.8, 10.2 und 10.2' sowie 8.9 geschlossen sind.

Sofern die Speicherbehälter 9 und 9' bereits Sterilisierwasser 5 aus einem vorhergehenden Sterilisationsprozess enthalten, kann dieses alternativ aus den Speicherbehältern 9 und 9' über die Rückführvorrichtungen 10 bzw. 10' in den Arbeitsbehälter 2 eingebracht werden. Hierzu ist das Sterilisierwasser 5 aus den Speicherbehältern 9 und 9' über die Ventile 10.2 und 10.2' sowie die Umwälzvorrichtung 8 und das Ventil 8.8 in die Sterilisierkammer 4 geführt. Ventile 11.2 und 11.2' sowie 12.1 und 8.9 sind dabei geschlossen.

Wenn ein einzelner Speicherbehälter, z.B. Speicherbehälter 9, ausreicht, kann auf den weiteren Speicherbehälter, z.B. Speicherbehälter 9', mit den dazu gehörigen Armaturen wie z.B. die Rückführvorrichtung 10' verzichtet werden.

Anschliessend wird das Sterilisierwasser 5 mittels der Umwälzpumpe 8.1 über die Berieselungsvorrichtung 6.1 über das Sterilisiergut 3 umgewälzt. Die Ventile 8.7 und 8.8 sind dabei geöffnet, währen die Ventile 11.2 und 11.2', 10.2 und 10.2' sowie 8.9 geschlossen sind. Sofern ein Ausgleich des Füllstandes erforderlich ist, kann auch während des Umwälzens über Ventil 12.1 Frischwasser zugeführt werden, ansonsten ist dieses während des Umwälzens in de Regel geschlossen.

Das Sterilisierwasser 5 wird über die Rohrleitung 8.2 durch den Wärmetauscher 8.4 geführt, über welchen das umgewälzte Sterilisierwasser 5 indirekt auf eine vordefinierte Verfahrenstemperatur aufgeheizt wird. Das Ventil 8.6 zur Zufuhr des Heizmediums ist dabei geöffnet (Ventil 8.5 geschlossen). Bei einer Sterilisation beträgt die Verfahrenstemperatur mehr als 100°C, typischerweise 121 °C, während bei einer Tyndallisierung das Sterilisierwasser 5 typischerweise auf etwa 100 °C geheizt wird. Als Heizmedium kann beispielsweise Wasserdampf zum Einsatz kommen.

Nach Ablauf einer Haltephase, während der das Sterilisiergut 3 bei der gewünschten Verfahrenstemperatur sterilisiert (bzw. tyndallisiert oder pasteurisiert) wird, wird das umgewälzte Sterilisierwasser 5 und damit das Sterilisiergut 3 durch den Wärmetauscher 8.3 auf eine vordefinierte Entnahmetemperatur (üblicherweise zwischen 30°C und 90°C) heruntergekühlt. Hierzu ist das Ventil 8.5 für die Zufuhr des Kühlmediums geöffnet, während das Ventil 8.6 geschlossen ist.

Nach Ende der Kühlung wird das Sterilisierwasser 5 entweder über das Ventil 8.7 ins Abwasser abgelassen oder für eine erneute Verwendung über Ventile 11.2 und 11.2' der Transfervorrichtungen 11 bzw. 11' in die im Arbeitsbehälter 2 integrierten Speicherbehälter 9 und 9' zurückgeführt. Das Ventil 8.8 ist in diesem Fall geschlossen. Dazu kann die Umwälzpumpe 8.1 verwendet werden, welche das Sterilisierwasser 5 über das Ventil 8.7 aus der Sterilisierkammer 4 fördert und den Transfervorrichtungen 11 und 11' zuführt.

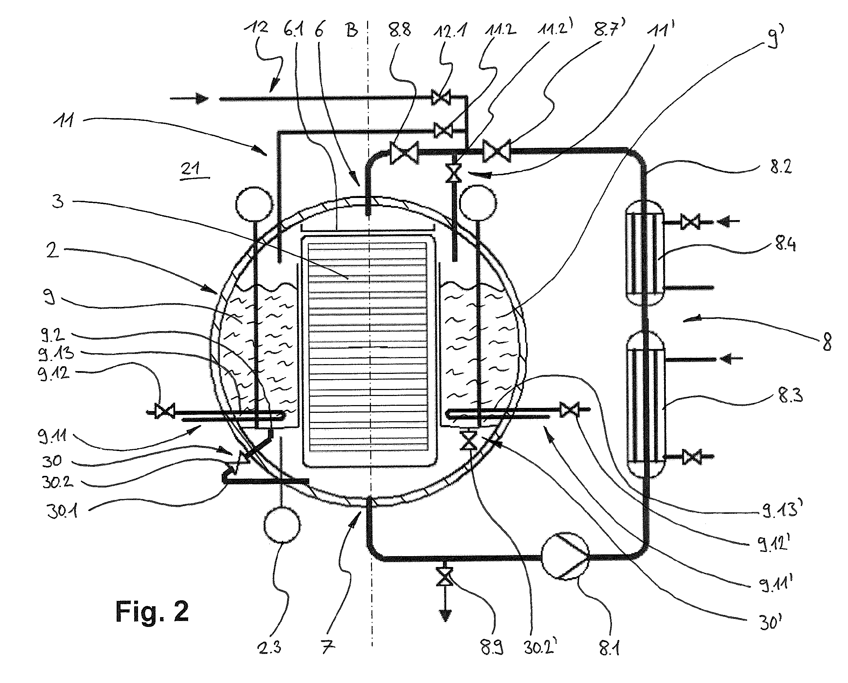

Die Speicherbehälter 9 und 9' werden bei Bedarf anschliessend wieder über die Ventile 12.1, 11.2 und 11.2' mit Frischwasser auf ein vordefiniertes Füllniveau gefüllt. Damit das Sterilisierwasser 5 in den Speicherbehältern 9 und 9' nicht verkeimt, kann es in den Speicherbehältern 9 und 9' auf eine Temperatur im Bereich von etwa 60 bis 90°C, typischerweise ca. 80°C, aufgeheizt werden. Hierzu kann eine Heizvorrichtung in den Speicherbehältern vorgesehen sein (in Fig. 1 nicht dargestellt, siehe Fig. 2).

In der Sterilisierkammer 4 verbleibendes Restwasser kann entweder am Boden des Arbeitsbehälters 2 bzw., sofern vorhanden, im Sammelbehälter 7.3 der Abfuhrvorrichtung 7 (siehe Fig. 3), belassen werden, wenn anschliessend ein weiterer Sterilisationsprozess erfolgt. Alternativ kann die Sterilisierkammer 4 bzw. der Arbeitsbehälter 2 über Ventile 8.7 und 8.9 komplett entleert werden. In der Folge wird der Arbeitsbehälter 2 geöffnet und das Sterilisiergut 3 kann entnommen werden.

Figur 2 zeigt eine zur Ansicht der Fig. 1 analoge schematische Darstellung einer weiteren Ausführungsform einer erfindungsgemässen Vorrichtung 21. Die Vorrichtung 21 unterscheidet sich im Wesentlichen in der Ausbildung der Rückführvorrichtungen 10 bzw. 10' von der Vorrichtung 1. Im Folgenden werden nur die Unterschiede zur Vorrichtung 1 beschrieben, während für die übrigen identisch ausgebildeten Komponenten (mit gleichen Bezugszeichen) auf die Fig. 1 verwiesen wird.

Eine Rückführvorrichtung 30 der Vorrichtung 21 umfasst anstelle der Rohrleitung 10.1 der Rückführvorrichtung 10 eine Rohrleitung 30.1, welche ebenfalls im Bereich des Knicks am Speicherbehälter 9 anschliesst und mit dem Innenraum 9.4 des Speicherbehälters 9 kommuniziert. Die Rohrleitung 30.1 führt durch die Behälterwand 2.1 aus dem Arbeitsbehälter 2 hinaus und an einer tiefer angeordneten Stelle wieder in den Arbeitsbehälter 2 hinein. Im Innenraum 2.2 mündet die Rohrleitung 30.1 im Bereich der Sterilisierkammer 4. In einem Bereich ausserhalb des Arbeitsbehälters 2 ist eine Ventilvorrichtung 30.2 in der Rohrleitung 30.1 vorhanden, mit welcher ein Fluiddurchgang durch die Rohrleitung 30.2 geschlossen oder geöffnet werden kann. Die Rohrleitung 30.1 ist dabei derart ausgebildet, z.B. mit einem stetige Gefälle versehen, sodass das Sterilisierwasser 5 aufgrund der Schwerkraft vom Speicherbehälter 9 durch die Rohrleitung 30.1 fliesst. Auf diese Weise kann das im Speicherbehälter 9 vorhandene Sterilisierwasser 5 ohne Pumpe durch einfaches Öffnen des Ventils 30.2 alleine aufgrund der Schwerkraft in die Sterilisierkammer 4 eingebracht werden.

Anstelle der Rohrleitung 10.1' der Rückführvorrichtung 10' schliesst im Gegensatz zur Vorrichtung 1 direkt eine innerhalb des Arbeitsbehälters 2 angeordnete Ventilvorrichtung 30.2' einer Rückführvorrichtung 30' am Knick des zweiten Speicherbehälters 9' an. Die Ventilvorrichtung 30.2' mündet dabei direkt im Innenraum 2.2 des Arbeitsbehälters 2. Die Ventilvorrichtung 30.2' bildet somit einen Abfluss des Speicherbehälters 9', welcher ein direktes Ablassen von im Speicherbehälter 9' vorhandenem Sterilisierwasser die Sterilisierkammer 4 ermöglicht.

Da bei der Vorrichtung 21 somit keine Rohrleitungen (wie Rohrleitungen 10.1 und 10.1' gemäss Fig. 1) im Bereich der Abfuhrvorrichtung 7 in die Rohrleitung 8.2 münden, entfällt auch das Erfordernis einer Ventilvorrichtung 8.7. Die Rohrleitung 8.2 der Vorrichtung 21 schliesst somit im Gegensatz zu der Vorrichtung 1 direkt an den Rohrleitungsabschnitt 7.2 an.

Hingegen weist die Rohrleitung 8.2 der Vorrichtung 21 in Flussrichtung im Bereich vor der Doppelverzweigung bei den Rohrleitungen 11.1 und 11.1' der Transfervorrichtungen 11 und 11' eine zusätzliche Ventilvorrichtung 8.7' auf, welche einen Abschluss der Rohrleitung 8.2 vor der Verzweigung ermöglicht.

Wie bereits im Zusammenhang mit Fig. 1 erwähnt, können die Speicherbehälter 9 und 9' mit einer Heizvorrichtung versehen sein, um in den Speicherbehältern 9 und 9' zwischengelagertes Sterilisierwasser 5 zur Verhinderung einer Verkeimung auf ca. 80°C (im Bereich 60-90°C) aufzuheizen. Die Speicherbehälter 9 und 9' der Vorrichtung 21 sind daher mit jeweils einer Heizvorrichtung 9.11 und 9.11' versehen, welche über eine Ventilvorrichtung 9.12 bzw. 9.12' die Zufuhr eines Heizmediums in eine im jeweiligen Speicherbehälter 9 oder 9' angeordnetes Heizelement 9.13 bzw. 9.13' ermöglicht.

Ein Verfahren zur Sterilisierung von Sterilisiergut mit der beschriebenen Vorrichtung 21 kann weitgehend analog zum Verfahren mit der Vorrichtung 1 verlaufen. Im Folgenden sind die mit der unterschiedlichen strukturellen Ausbildung verbundenen unterschiedlichen Verfahrensschritte beschrieben. Die übrigen Verfahrensschritte erfolgen analog den oben beschriebenen:
Bei der Vorrichtung 21 kann bei Prozessbeginn das Sterilisierwasser 5 entweder direkt als Frischwasser vom Anschluss 12 über die Ventile 12.1 und 8.7' über die Abführöffnung 7.1 in die Sterilisierkammer 4 zugeführt werden. Dabei sind die Ventile 11.2 und 11.2', 8.8 sowie 8.9 geschlossen.

Sofern die Speicherbehälter 9 und 9' bereits Sterilisierwasser 5 aus einem vorhergehenden Sterilisationsprozess enthalten, kann dieses alternativ aus den Speicherbehältern 9 und 9' über die Rückführvorrichtungen 30 bzw. 30' in den Arbeitsbehälter 2 bzw. die Sterilisierkammer 4 eingebracht werden. Hierzu wird das Sterilisierwasser 5 aus den Speicherbehältern 9 und 9' über die Ventile 30.2 und 30.2' direkt aufgrund der Schwerkraft in die Sterilisierkammer 4 abgelassen.

Wie bei der Vorrichtung 1 kann auch hier ein einzelner Speicherbehälter, z.B. Speicherbehälter 9, ausreichen, sodass auf den anderen, z.B. Speicherbehälter 9', verzichtet werden kann.

Anschliessend wird das Sterilisierwasser 5 mittels der Umwälzpumpe 8.1 über die Berieselungsvorrichtung 6.1 über das Sterilisiergut 3 umgewälzt. Die Ventile 8.7' und 8.8 sind dabei geöffnet, währen die Ventile 11.2 und 11.2' sowie 8.9 geschlossen sind.

Um nach der Haltephase und Abkühlung das Sterilisierwasser 5 für eine erneute Verwendung in die Speicherbehälter 9 und 9' zu überführen, wird das Ventil 8.8 geschlossen während die Ventile 8.7' und 11.2 und 11.2' geöffnet sind. Ventile 12.1 und 8.9 sowie Ventile 30.2 und 30.2' sind ebenfalls geschlossen. Mit der Umwälzpumpe 8.1 kann so das Sterilisierwasser 5 aus der Sterilisierkammer 4 in die Speicherbehälter 9 und 9' gefördert werden. Anschliessend können die Speicherbehälter 9 und 9' wieder über das Ventile 12.1 mit Frischwasser auf ein vordefiniertes Füllniveau gefüllt werden, wobei die Ventile 11.2 und 11.2' geöffnet und die Ventile 8.7', 8.8 geschlossen sind.

Die übrigen Verfahrensschritte entsprechen im Wesentlichen den im Zusammenhang mit der Vorrichtung 1 beschriebenen Verfahrensschritten.

Figur 3 zeigt eine Schnittansicht durch einen Arbeitsbehälter 2 einer erfindungsgemässen Vorrichtung 1 oder 21 in der Ebene B, welche vertikal angeordnet ist und in welcher die Längsachse A verläuft.

Der Arbeitsbehälter 2 ist endseitig von jeweils einer Stirnwand 2.4 und 2.5 abgeschlossen. In jeder der beiden Stirnwände 2.4 und 2.5 ist eine Öffnung 2.6 bzw. 2.7 ausgebildet, welche im Querschnitt weitgehend einem Querschnitt der Sterilisierkammer 3 entspricht und mit einer Türe (nicht dargestellt) druckdicht verschliessbar ist.

Innenseitig an der Behälterwand 2.1 ist der Speicherbehälter 9 angeordnet. Der Innenraum 9.4 des Speicherbehälters 9 ist in Querrichtung, d.h. senkrecht zur Längsrichtung A bzw. senkrecht zur Ebene B, von der Seitenwand 9.3 sowie einem Abschnitt der Behälterwand 2.2 begrenzt. Endseitig sind die Stirnwände 9.6 und 9.7 angeordnet, welche den Innenraum 9.4 über seinen gesamten Querschnitt in Längsrichtung A abschliessen. An der Oberseite 9.8 ist der Speicherbehälter 9 offen, während er nach unten vom Boden 9.2 abgeschlossen ist. Der Speicherbehälter 9 erstreckt sich dabei weitgehend über die gesamte Länge des Innenraums 2.2 des Arbeitsbehälters 2, sodass die Stirnwände 9.6 und 9.7 in Längsrichtung A jeweils knapp hinter den Stirnwänden 2.4 bzw. 2.5 des Arbeitsbehälters 2 angeordnet sind. Oberhalb der offenen Oberseite 9.8 des Speicherbehälters 9 tritt der Rohrabschnitt 6.2 in Längsrichtung A etwa mittig am Arbeitsbehälter 2 angeordnet durch die Behälterwand 2.1.

Zur Stabilisierung der Behälterwand 9.4 weist der Speicherbehälter 9 Stützrippen 9.9 auf, welche die freie, obere Längskante der Seitenwand 9.3 an der Behälterwand 2.1 des Arbeitsbehälters 2 festlegen. Unterhalb des Bodens 9.2 sind ebenfalls Stützrippen 9.10 angeordnet, welche den Boden 9.2 an der Behälterwand 2.1 abstützen. Damit ist zum einen der Speicherbehälter 9 am Arbeitsbehälter 2 stabilisiert. Zum anderen können die Stützrippen 9.9 und/oder 9.10 derart ausgebildet sein, dass sie zusätzlich zur Stabilisierung des Arbeitsbehälters 2 beitragen. Aussen an der Behälterwand 2.1 weist der Arbeitsbehälter 2 ringförmig umlaufende Stützrippen 2.8 auf, um die strukturelle Stabilität des Arbeitsbehälters 2 zu verbessern.

In einem unteren Bereich des Arbeitsbehälters 2 ist ein Sammelbehälter 7.3 der Abfuhrvorrichtung 7 ausgebildet, in welchem das Sterilisierwasser 5 gesammelt werden kann. Der Sammelbehälter 7.2 ist vorliegend als endseitig abgeschlossenes Halbrohr ausgebildet und längs einer unteren Scheitellinie aussen am den Arbeitsbehälter 2 angebracht. Entsprechende Abflussöffnungen 7.4 verbinden die Verfahrenskammer 4 mit dem Sammelbehälter 7.3. Der Arbeitsbehälter 2 kann im Innenraum 2.2 beispielsweise eine Fördervorrichtung und/oder Auflagefläche für das Sterilisiergut 3 respektive für das Sterilisiergut 3 tragende Paletten oder Trays aufweisen.

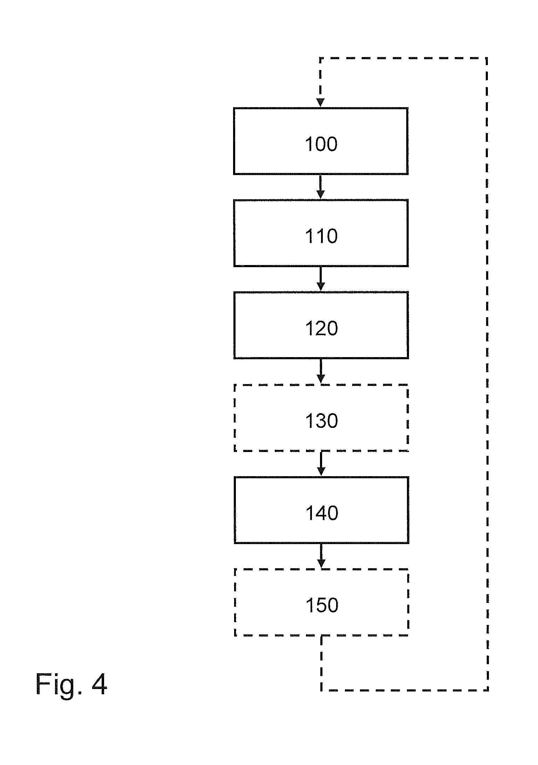

Figur 4 zeigt ein Flussdiagramm der wesentlichen Verfahrensschritte eines erfindungsgemässen Verfahrens zur Durchführung auf einer erfindungsgemässen Vorrichtung 1 oder 21.

Einbringen 100 von dem zu behandelndem Gut (3) in die Sterilisierkammer 4 des Arbeitsbehälters 2;
Einbringen 110 des zur Durchführung des Verfahrens erforderlichen Menge des Sterilisierwasser 5 aus dem oder den im Arbeitsbehälter 2 angeordneten Speicherbehälter(n) 9 bzw. 9' in die Sterilisierkammer 4;
beheiztes Umwälzen 120 des Sterilisierwassers 5 mit der Umwälzvorrichtung 8 zwischen der Abfuhrvorrichtung 7 und der Zufuhrvorrichtung 6, wobei das Sterilisierwasser 5 auf die gewünschte Verfahrenstemperatur geheizt wird;
allenfalls gekühltes Umwälzen 130 des Sterilisierwassers 5 mit der Umwälzvorrichtung 8 zwischen der Abfuhrvorrichtung 7 und der Zufuhrvorrichtung 6, wobei das Sterilisierwasser 5 auf eine gewünschte Entnahmetemperatur gekühlt wird;
Überführen 140 eines wesentlichen Anteils des in der Sterilisierkammer 4 vorhandenen Sterilisierwassers 5 in den oder die im Arbeitsbehälter 2 angeordneten Speicherbehälter 9 bzw. 9'; gegebenenfalls Ablassen 150 eines Teils des Sterilisierwassers 5 und Ausgleichen eines Füllstandes im oder in den Speicherbehälter(n) 9 bzw. 9' durch Zufuhr von zusätzlichem Sterilisierwasser 5 von aussen.

In der Regel wird das Sterilisiergut 3 nach Abschluss des Verfahrens aus der Sterilisierkammer 4 entnommen, worauf das Verfahren erneut mit Schritt 100 beginnend durchgeführt werden kann.

## Patentansprüche

1. Vorrichtung (1, 21) zur Durchführung eines Wärmebehandlungsverfahrens mit einer Wärmebehandlungsflüssigkeit, insbesondere ein Heisswasserberieselungssterilisator, umfassend
a) einen druckfest verschliessbaren, vorzugsweise als hohler Kreiszylinder ausgebildeten, Arbeitsbehälter (2), dessen Innenraum (2.2) eine Verfahrenskammer (4) zur Anordnung von zu behandelndem Gut (3) umfasst,
b) eine Zufuhrvorrichtung (6) zur Zufuhr einer Wärmebehandlungsflüssigkeit (5) in die Verfahrenskammer (4), wobei vorzugsweise die Zufuhrvorrichtung (6) eine Berieselungsvorrichtung (6.1) umfasst, welche zum gleichmässigen Berieseln von in der Verfahrenskammer (4) angeordnetem zu behandelndem Gut (3) mit der Wärmebehandlungsflüssigkeit (5) ausgebildet ist,
c) eine Abfuhrvorrichtung (7) zum Abführen von in der Verfahrenskammer (4) vorhandener Wärmebehandlungsflüssigkeit (5),
d) eine Umwälzvorrichtung (8) zum Umwälzen einer für die Durchführung des Wärmebehandlungsverfahrens in die Verfahrenskammer (4) eingebrachten Menge der Wärmebehandlungsflüssigkeit (5) zwischen Abfuhrvorrichtung (7) und Zufuhrvorrichtung (6),
e) eine Heizvorrichtung (8.4) zum Heizen der Wärmebehandlungsflüssigkeit (5),
f) einen Speicherbehälter (9, 9') zum Zwischenspeichern der weitgehend gesamten für das Wärmebehandlungsverfahren in die Verfahrenskammer (4) eingebrachten Menge der Wärmebehandlungsflüssigkeit (5),
g) eine Transfervorrichtung (11) zum Überführen der Wärmbehandlungsflüssigkeit (5) aus der Verfahrenskammer (4) in den Speicherbehälter (9, 9')sowie
h) eine Rückführvorrichtung (10, 10', 30, 30') zum Rückführen der Wärmbehandlungsflüssigkeit (5) aus dem Speicherbehälter (9, 9')in die Verfahrenskammer (4),
**dadurch gekennzeichnet, dass**
der Speicherbehälter (9, 9') vollständig im Innenraum (2.2) des Arbeitsbehälters (2) angeordnet ist.

2. Vorrichtung (1) nach Anspruch 1, **dadurch gekennzeichnet, dass** die Rückführvorrichtung (10, 10') derart ausgebildet ist, dass der Speicherbehälter (9) über die Rückführvorrichtung (10, 10') mit der Umwälzvorrichtung (8) fluidmässig verbindbar ist, sodass die Wärmebehandlungsflüssigkeit (5) über die Umwälzvorrichtung (8) aus dem Speicherbehälter (9) in die Verfahrenskammer (4) rückführbar ist.

3. Vorrichtung (21) nach Anspruch 1, **dadurch gekennzeichnet, dass** die Rückführvorrichtung (30, 30') derart ausgebildet ist, dass der Speicherbehälter (9') über die Rückführvorrichtung (30, 30') direkt mit der Verfahrenskammer (4) verbindbar ist, wobei insbesondere der Speicherbehälter (9') derart im Innenraum (2.2) des Arbeitsbehälters (2) angeordnet ist und die Rückführvorrichtung (30, 30') derart ausgebildet ist, dass die Wärmebehandlungsflüssigkeit (5) aufgrund der Schwerkraft über die Rückführvorrichtung (30, 30') in die Verfahrenskammer (4) fliessen kann, wenn der Speicherbehälter (9') über die Rückführvorrichtung (30, 30') mit der Verfahrenskammer (4) fluidmässig verbunden ist.

4. Vorrichtung (1, 21) nach einem der Ansprüche 1 bis 3, **dadurch gekennzeichnet, dass** die Rückführvorrichtung (10', 30') eine im Innenraum (2.2) des Arbeitsbehälters (2) angeordnete Ventilvorrichtung (10.2', 30.2') umfasst, wobei bevorzugt die Rückführvorrichtung (30') vollständig im Innenraum des Arbeitsbehälters angeordnet ist.

5. Vorrichtung (1, 21) nach einem Ansprüche 1 bis 3, **dadurch gekennzeichnet, dass** die Rückführvorrichtung (10, 30) eine ausserhalb des Arbeitsbehälters (2) angeordnete Ventilvorrichtung (10.2, 30.2) umfasst.

6. Vorrichtung (1, 21) nach einem der Ansprüche 1 bis 5, **dadurch gekennzeichnet, dass** die Umwälzvorrichtung (8) eine Ventilanordnung (8.8, 11.2, 11.2') umfasst, mit welcher ein von der Abfuhrvorrichtung (7) abgeführtes Wärmbehandlungsmittel (5) wahlweise der Zufuhrvorrichtung (6) oder über die Transfervorrichtung (11) dem Speicherbehälter (9, 9') zugeführt werden kann.

7. Vorrichtung (1, 21) nach einem der Ansprüche 1 bis 6, **dadurch gekennzeichnet, dass** die Umwälzvorrichtung (8) einen Wärmetauscher (8.4) zur Heizung des Wärmebehandlungsmittels (5) beim Umwälzen umfasst und vorzugsweise einen weiteren Wärmetauscher (8.3) zur Kühlung des Wärmebehandlungsmittels (5) beim Umwälzen aufweist.

8. Vorrichtung (1, 21) nach einem der Ansprüche 1 bis 7, **dadurch gekennzeichnet, dass** der Speicherbehälter (9, 9') an einer Innenwand des Arbeitsbehälters (2) ausgebildet ist, wobei insbesondere die Innenwand des Arbeitsbehälters (2) einen Teil einer Wand des Speicherbehälters (9.9') bildet und vorzugsweise der Speicherbehälter (9. 9') mit dem Innenraum des Arbeitsbehälters (2) kommuniziert, insbesondere in einem oberen Bereich an der Oberseite (9.8, 9.8') offen ist.

9. Vorrichtung nach einem der Ansprüche 1 bis 7, **dadurch gekennzeichnet, dass** der Speicherbehälter zum Innenraum des Arbeitsbehälters hin fluiddicht abschliessbar ist.

10. Vorrichtung (1, 21) nach einem der Ansprüche 1 bis 9, **dadurch gekennzeichnet, dass** der Arbeitsbehälter (2) im Wesentlichen als länglicher Kreiszylinder ausgebildet ist und die Verfahrenskammer (4) sich längs der Längsrichtung (A) des Arbeitsbehälters (2) erstreckt und einen weitgehend rechteckigen Querschnitt aufweist, wobei vorzugsweise der Speicherbehälter (9, 9') einen weitgehend kreissegmentförmigen Querschnitt aufweist und in einem Bereich zwischen Verfahrenskammer (4) und Wand (2.1) des Arbeitsbehälters (2) angeordnet ist, insbesondere derart, dass die Wand des Speicherbehälters (9, 9') die Verfahrenskammer (4) zumindest teilweise begrenzt.

11. Vorrichtung (1, 21) nach einem der Ansprüche 1 bis 10, **dadurch gekennzeichnet, dass** sich der Speicherbehälter (9, 9') weitgehend über die gesamte Länge des Innenraums (2.2) des Arbeitsbehälters (2) erstreckt und vorzugsweise ein weiterer Speicherbehälter (9') vorhanden ist, welcher bezüglich der Längsachse (A) des Arbeitsbehälters (2) dem ersten Speicherbehälter (9) gegenüberliegend im Innenraum (2.2) angeordnet und weitgehend, insbesondere spiegelbildlich, baugleich ausgebildet ist.

12. Vorrichtung (21) nach einem der Ansprüche 1 bis 11, **dadurch gekennzeichnet, dass** der Speicherbehälter (9, 9') eine Heizvorrichtung (9.11, 9.11') umfasst, mit welcher die Wärmebehandlungsflüssigkeit (5) zur Verhinderung einer Verkeimung beheizt werden kann, wenn sie im Speicherbehälter (9, 9') zwischengelagert ist.

13. Verfahren zur Wärmebehandlung mit einer Wärmebehandlungsflüssigkeit (5), insbesondere zur Durchführung mit einer Vorrichtung (1, 21) gemäss einem der Ansprüche 1 bis 12, umfassend die Schritte:
a) Einbringen von zu behandelndem Gut in eine Verfahrenskammer (4) eines Arbeitsbehälters (2),
b) Einbringen einer zur Durchführung des Verfahrens erforderlichen Menge einer Wärmebehandlungsflüssigkeit (5) aus einem im Arbeitsbehälter (2) angeordneten Speicherbehälter (9, 9') in die Verfahrenskammer (4),
c) beheiztes Umwälzen der Wärmebehandlungsflüssigkeit (5) mit einer Umwälzvorrichtung (8) zwischen einer Abfuhrvorrichtung (7) zur Abfuhr von Wärmebehandlungsflüssigkeit (5) aus der Verfahrenskammer (4) und einer Zufuhrvorrichtung (6) zur Zufuhr von Wärmebehandlungsflüssigkeit (6) in die Verfahrenskammer (4), wobei die Wärmebehandlungsflüssigkeit (5) auf eine Verfahrenstemperatur geheizt wird,
d) Überführen eines wesentlichen Anteils der in der Verfahrenskammer (4) vorhandenen Wärmebehandlungsflüssigkeit (5) in den im Arbeitsbehälter (2) angeordneten Speicherbehälter (9, 9'),
e) gegebenenfalls Ablassen eines Teils der Wärmebehandlungsflüssigkeit (5) und Ausgleichen eines Füllstandes im Speicherbehälter (9, 9') durch Zufuhr von zusätzlicher Wärmebehandlungsflüssigkeit (5) von aussen.

14. Verfahren gemäss Anspruch 13, **dadurch gekennzeichnet, dass** die Zufuhrvorrichtung (6) eine Berieselungsvorrichtung (6.1) zum gleichmässigen Berieseln von in der Verfahrenskammer angeordnetem zu behandelndem Gut umfasst und dass im Schritt des Umwälzens in der Verfahrenskammer (4) angeordnetes zu behandelndes Gut (3) über die Zufuhrvorrichtung (6) gleichmässig mit der Wärmebehandlungsflüssigkeit (5) berieselt wird, und vorzugsweise im Schritt der Überführung der Wärmebehandlungsflüssigkeit (5) in den Speicherbehälter (9, 9') die Umwälzvorrichtung (8) die Wärmebehandlungsflüssigkeit (5) über eine Transfervorrichtung (11) dem Speicherbehälter (9, 9') zuführt.

15. Verfahren nach einem der Ansprüche 13 bis 14, **dadurch gekennzeichnet, dass** im Schritt des Einbringens der Wärmebehandlungsflüssigkeit (5) aus dem Speicherbehälter (9, 9') in die Verfahrenskammer (4) der Speicherbehälter (9, 9') über eine Rückführvorrichtung (10, 10') mit der Umwälzvorrichtung (8) fluidmässig verbunden wird und die Wärmebehandlungsflüssigkeit (5) über die Umwälzvorrichtung (8) und die Zufuhrvorrichtung aus dem Speicherbehälter (9, 9') in die Verfahrenskammer (4) eingebracht wird und vorzugsweise

16. Verfahren nach einem der Ansprüche 13 bis 14, **dadurch gekennzeichnet, dass** im Schritt des Einbringens der Wärmebehandlungsflüssigkeit (5) aus dem Speicherbehälter (9, 9') in die Verfahrenskammer (4) der Speicherbehälter (9, 9') über eine Rückführvorrichtung (30, 30') direkt mit der Verfahrenskammer (4) fluidmässig verbunden wird und die Wärmebehandlungsflüssigkeit (5) aufgrund der Schwerkraft über die Rückführvorrichtung (30, 30') aus dem Speicherbehälter (9, 9') in die Verfahrenskammer (4) fliesst.

17. Verfahren nach einem der Ansprüche 13 bis 16, **dadurch gekennzeichnet, dass** eine Wärmebehandlungsflüssigkeit (5) zur Anwendung kommt, welche im Wesentlichen aus Wasser besteht.
